# EUROPEAN PATENT SPECIFICATION

(11) **EP 2 778 377 B1**
(45) Date of publication and mention of the grant of the patent: **11.12.2019**
(21) Application number: 11826156.9
(22) Date of filing: 04.10.2011
(51) Int. Cl.: F02D 23/00, F02B 37/24, F02D 35/02, F02D 41/40, F02D 41/00, F02D 41/14

(54) **CONTROL DEVICE OF INTERNAL COMBUSTION ENGINE**
STEUERVORRICHTUNG FÜR EINEN VERBRENNUNGSMOTOR
DISPOSITIF DE COMMANDE DE MOTEUR À COMBUSTION INTERNE

(43) Date of publication of application: 17.09.2014
(73) Proprietor: TOYOTA JIDOSHA KABUSHIKI KAISHA, Toyota-shi, Aichi-ken, 471-8571 (JP)
(72) Inventor: NAGANO Shota, Toyota-shi Aichi 471-8571 (JP); TSUZUKI Naoyuki, Toyota-shi Aichi 471-8571 (JP)
(74) Representative: TBK
(86) International application number: PCT/JP2011/072850
(87) International publication number: WO 2013/051109

(56) References cited:
- EP-A2- 0 905 361
- JP-A- H11 159 385
- JP-A- 2001 280 150
- JP-A- 2005 090 468
- JP-A- 2005 299 530
- JP-A- 2007 064 157
- JP-A- 2009 103 063
- JP-A- 2010 169 046
- JP-A- 2010 203 421
- US-A1- 2003 051 474
- US-A1- 2011 208 408

## Description

The present invention relates to a control apparatus according to the preamble of claim 1 for a compression self-igniting internal combustion engine.

### Background Art

As disclosed in, for example, JP 2009-007966 A and JP 2009-085118 A, combustion of a diesel engine mounted in an automobile or the like is known to be mainly executed in the form of premixed combustion and diffusion combustion. Specifically, when a fuel injection from an injector into a combustion chamber is started, first, a combustible air-fuel mixture is generated due to evaporative diffusion of fuel (an ignition delay period). Next, this combustible air-fuel mixture undergoes self-ignition nearly simultaneously at several locations in the combustion chamber, and combustion progresses rapidly (premixed combustion). A fuel injection is continued, or a fuel injection is performed after a specific interval (a fuel injection suspending period) into the combustion chamber whose temperature has been sufficiently increased by this premixed combustion, thereby executing diffusion combustion. Thereafter, since unburnt fuel is still present after fuel injection is terminated, heat generation continues for a while (an afterburning period).

Recently, along with enforcement of stricter regulations on exhaust emissions from automobiles (Euro 6, for example), a suitable adjustment of the ignition period of an air-fuel mixture and thereby an improvement of exhaust emissions as well as prevention of combustion variation and misfire have been requested to be attained even in a state in which parameters that affect the ignition period of an air-fuel mixture, such as the pressure, the temperature, the gas (air) amount, the oxygen concentration, and the like in the cylinder (which is also referred to as "amounts of combustion state"), change due to an environmental change, a transient of operation, or the like.

A means known for suitably adjusting the ignition period of an air-fuel mixture is suitably adjusting the ignition delay period. Specifically, the boost pressure of intake air is made constant, or the amount of gas (amount of air) supplied to the cylinder is made constant. For example, in an engine equipped with a supercharger of a variable capacity type, the boost pressure of intake air is made constant or the amount of gas supplied to the cylinder is made constant by adjusting the variable capacity mechanism (for example, a nozzle vane mechanism).

However, even when the boost pressure of intake air is made constant or the amount of gas supplied to the cylinder is made constant as stated above, there is a limit to providing a suitable adjustment of the ignition delay period. A reason therefor will now be described below. Even when the boost pressure of intake air is made constant, the temperature of gas supplied to the cylinder changes if the outside air temperature, the gas temperature after supercharging, the EGR rate, or the like varies, and therefore the amount of intake gas into the cylinder changes, and the compression end temperature in the cylinder changes. Accordingly, due to this temperature change, the fuel ignition timing changes, and, as a result, the ignition delay period is shifted from an appropriate value. Also, even when the amount of gas supplied to the cylinder is made constant, if parameters (the aforementioned outside air temperature and the like) relating to the intake air temperature vary as stated above, the gas temperature and the in-cylinder pressure at the fuel injection time change. As a result, in this case as well, the ignition delay period shifts from an appropriate value.

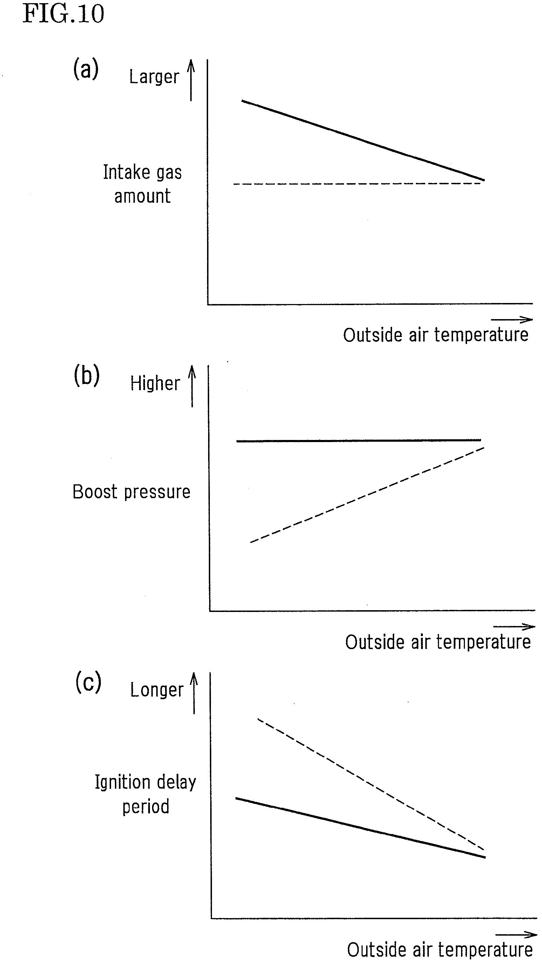

A case where the outside air temperature changes will now be described as a specific example. Fig. 10(a) is a diagram showing a change of the amount of intake gas relative to a change of the outside air temperature, Fig. 10(b) is a diagram showing a change of the boost pressure relative to a change of the outside air temperature, and Fig. 10(c) is a diagram showing a change of the ignition delay period relative to a change of the outside air temperature. The solid line in the diagrams represents a case where the boost pressure is made constant, and the dashed line in the diagrams represents a case where the amount of intake gas is made constant. In the case where the boost pressure is made constant, the amount of intake gas changes as the outside air temperature changes (the higher the outside air temperature, the smaller the amount of intake gas; see the solid line in Fig. 10(a). The higher the outside air temperature, the shorter the ignition delay period (see the solid line in Fig. 10(c)). On the other hand, in the case where the amount of gas is made constant, the boost pressure changes as the outside air temperature changes (the higher the outside air temperature, the higher the boost pressure; see the dashed line in Fig. 10(b). Accordingly, the higher the outside air temperature, the shorter the ignition delay period (see the dashed line in Fig. 10(c)). As described above, the ignition delay period varies as the outside air temperature changes, and thus it has been difficult to suitably adjust the ignition delay period.

In particular, in the case where pilot injection and main injection are performed as fuel injection, if the ignition delay period of the pilot injection varies, a preheating effect on fuel injected in the main injection varies, and accordingly, the ignition timing for fuel injected in the main injection greatly varies. As a result, it is possible that misfire occurs in the cylinder, and, due to the change of the premix proportion, an increase of combustion noises (an increase of combustion noises as the premix proportion becomes large) or an increase of the amount of black smoke generated (an increase of the amount of black smoke generated as the premix proportion becomes small) occurs.

JP H11-159385 A shows a generic control apparatus according to the preamble of claim 1 for a compression self-igniting internal combustion engine including a supercharger of a variable capacity type having a variable capacity mechanism. This control apparatus comprises a control means that controls the variable capacity mechanism such that an actual ignition delay period of fuel injected into a cylinder from a fuel injection valve is brought close to a target ignition delay period, the variable capacity mechanism being a variable nozzle vane mechanism that adjusts an opening degree of a plurality of nozzle vanes that can vary a flow path area of an exhaust gas flow path inside the supercharger.

A further control apparatus according to the prior art is shown in US 2003/051474 A1.

### Summary of the invention

It is the object of the present invention to further develop a generic control apparatus according to the preamble of claim 1 for a compression self-igniting internal combustion engine such that an ignition delay period control is suitably adjusted and an ideal combustion state can be achieved.

The object of the present invention is achieved by a control apparatus having the features of claim 1 for a compression self-igniting internal combustion engine.

Further advantageous developments according to the present invention are defined in the dependent claims.

It is an advantage of the present invention to provide a control apparatus for an internal combustion engine that can suitably adjust the ignition delay period.

According to the present invention, the variable capacity mechanism of a supercharger of a variable capacity type is controlled, thereby adjusting the ignition delay period of fuel such that the actual ignition delay period matches the target ignition delay period (an ignition delay period for enabling ideal combustion).

Specifically, the present invention is premised on a control apparatus for a compression self-igniting internal combustion engine equipped with a supercharger of a variable capacity type having a variable capacity mechanism. The control apparatus for a compression self-igniting internal combustion engine includes a control means that controls the variable capacity mechanism such that an actual ignition delay period of fuel injected into a cylinder from a fuel injection valve is brought close to a target ignition delay period.

According to this specific matter, in the case where the actual ignition delay period is shorter than the target ignition delay period, the variable capacity mechanism is controlled such that the actual ignition delay period is long, and in contrast, in the case where the actual ignition delay period is longer than the target ignition delay period, the variable capacity mechanism is controlled such that the actual ignition delay period is short. With conventional art, even when the boost pressure of intake air is made constant or the amount of gas supplied to the cylinder is made constant, it is difficult to suitably adjust the ignition delay period due to an environmental change, a transient of operation, or the like. In contrast, according the present solving means, the variable capacity mechanism is controlled, thus enabling the actual fuel ignition delay period to be brought close to the target ignition delay period while reflecting the influences of an environmental change, a transient of operation, or the like. Accordingly, it is possible to obtain a suitable premix proportion as the ignition delay period is suitably adjusted, and prevention of misfire and improvement of exhaust emissions can be attained.

A specific configuration of the control means is as follows. That is, a difference between ignition delay periods is obtained by subtracting the actual ignition delay period from the target ignition delay period, and the variable capacity mechanism is controlled such that the greater the ignition delay period difference, the longer the actual ignition delay period.

In this case, the actual ignition delay period is estimated based preferably on at least one of the boost pressure in the intake system, the amount of intake gas, the temperature of intake gas, the internal combustion engine coolant temperature, the fuel injection time, and the fuel injection amount, and in contrast, the target ignition delay period is set in accordance with the operating state of the internal combustion engine.

In this manner, by controlling the variable capacity mechanism such that the actual ignition delay period is brought close to the target ignition delay period, the ignition delay period can be adjusted highly precisely.

Specifically, the variable capacity mechanism is composed of a variable nozzle vane mechanism that adjusts the opening degree of a plurality of nozzle vanes that can vary the flow path area of an exhaust gas flow path inside the supercharger. In this case, the control means is designed to increase the opening degree of the nozzle vanes such that the larger a difference between ignition delay periods obtained by subtracting the actual ignition delay period from the target ignition delay period, the longer the actual ignition delay period of fuel.

As for an operation of fuel injection from the fuel injection valve into a cylinder, in the case where it is possible to perform at least main injection and auxiliary injection that is performed prior to the main injection and that contributes to preheating inside the cylinder, the control means is configured to control the variable capacity mechanism such that the actual ignition delay period of fuel injected in the auxiliary injection is brought close to the target ignition delay period.

This enables the combustion state of fuel injected in the main injection to arrive at an ideal combustion state, and as a result, it is possible to concurrently satisfy demands such as improving exhaust emissions by suppressing the amount of NOx generated and the amount of smoke generated, reducing combustion noises during a combustion stroke, and ensuring sufficient engine torque.

Also, in the case where the variable capacity mechanism is composed of a variable nozzle vane mechanism as described above, the control means is configured such that, in a case of controlling an ignition delay period by adjustment of an opening degree of the nozzle vanes in an opening degree region where the opening degree is relatively large, an amount of nozzle vane opening degree change relative to an amount of unit ignition delay period change is set so as to be larger than in a case of controlling an ignition delay period by adjustment of an opening degree of the nozzle vanes in an opening degree region where the opening degree is smaller than in the former opening region.

Thereby, in accordance with the nozzle vane opening degree region, a suitable adjustment of an ignition delay period can be performed highly precisely that takes in consideration characteristics such as the rate of change of the ignition delay period relative to the amount of change of the nozzle vane opening degree being different.

In the present invention, by controlling the variable capacity mechanism of a supercharger of a variable capacity type, the ignition delay period of fuel is adjusted. Accordingly, as the ignition delay period is suitably adjusted, a suitable premix proportion is obtained, thereby enabling prevention of misfire and improvement of exhaust emissions.

### [Brief Description of Drawings]

[FIG. 1]

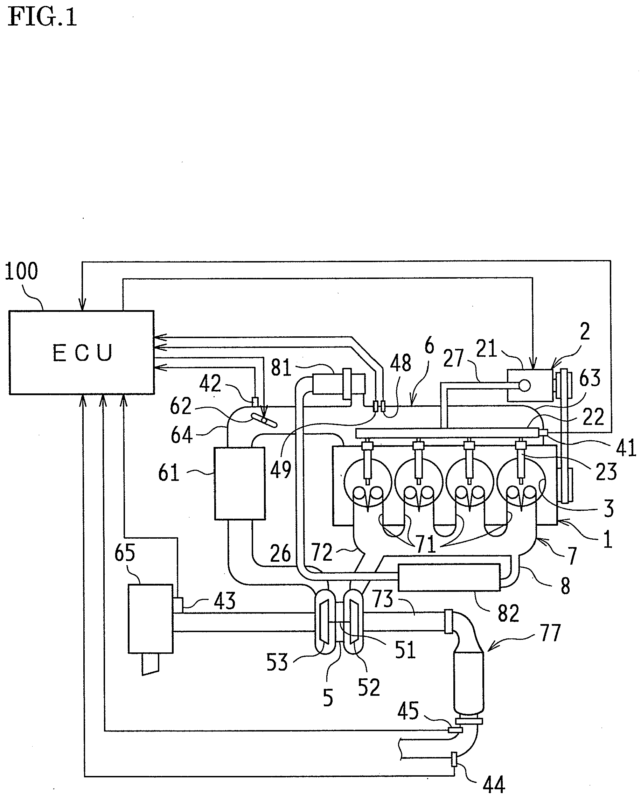

   Fig. 1 is a schematic configuration diagram showing an engine and the control system thereof according to an embodiment.
[FIG. 2]

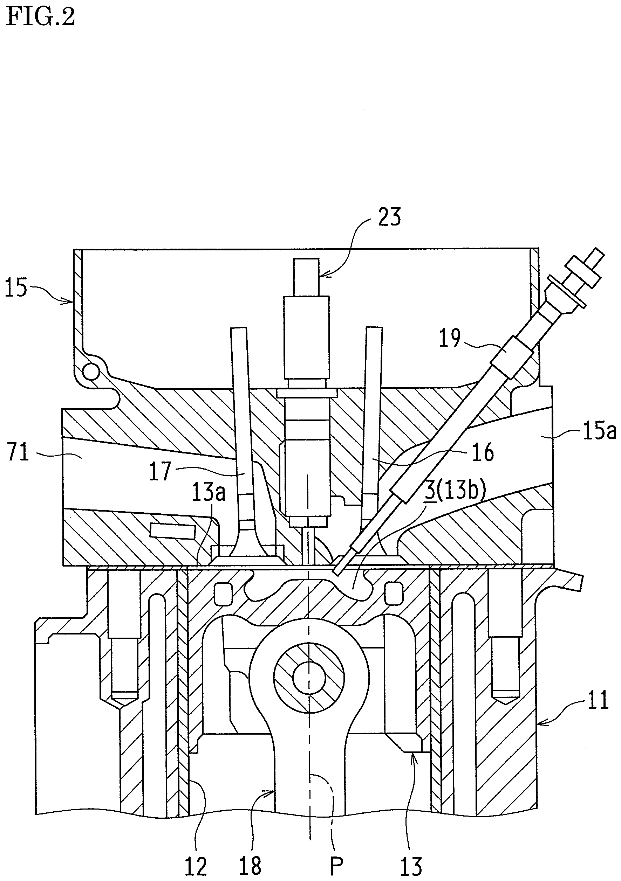

   Fig. 2 is a cross-sectional diagram showing the combustion chamber of a diesel engine and its surroundings.
[FIG. 3]

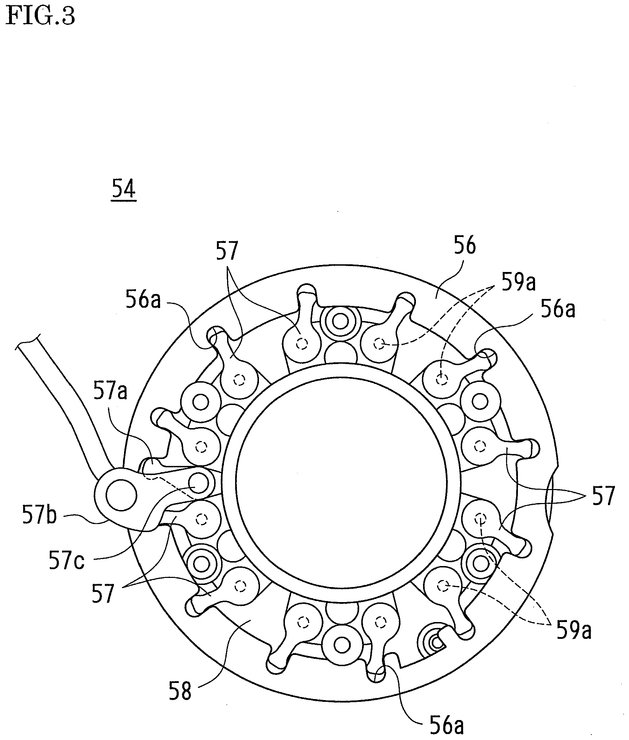

   Fig. 3 is a diagram showing a variable nozzle vane mechanism as viewed from the outer side of a turbocharger.
[FIG. 4]

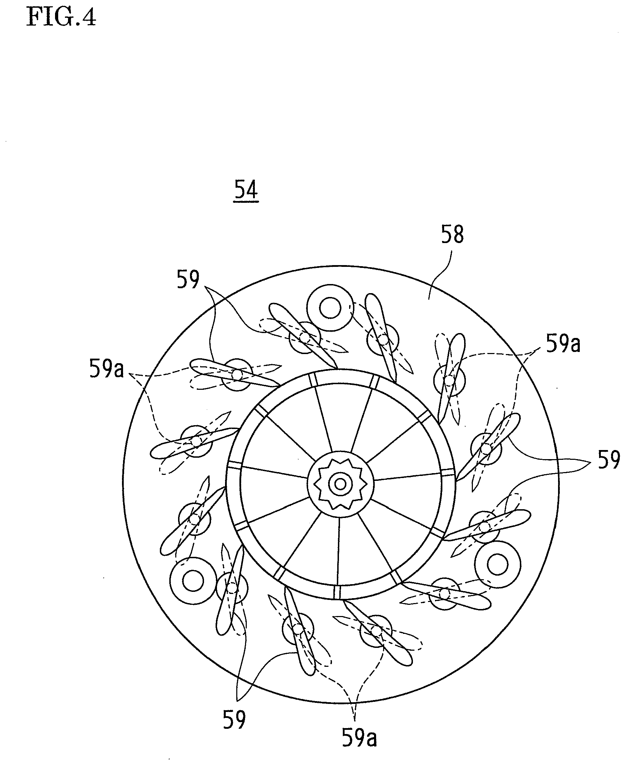

   Fig. 4 is a diagram showing a variable nozzle vane mechanism as viewed from the inner side of a turbocharger.
[FIG. 5]

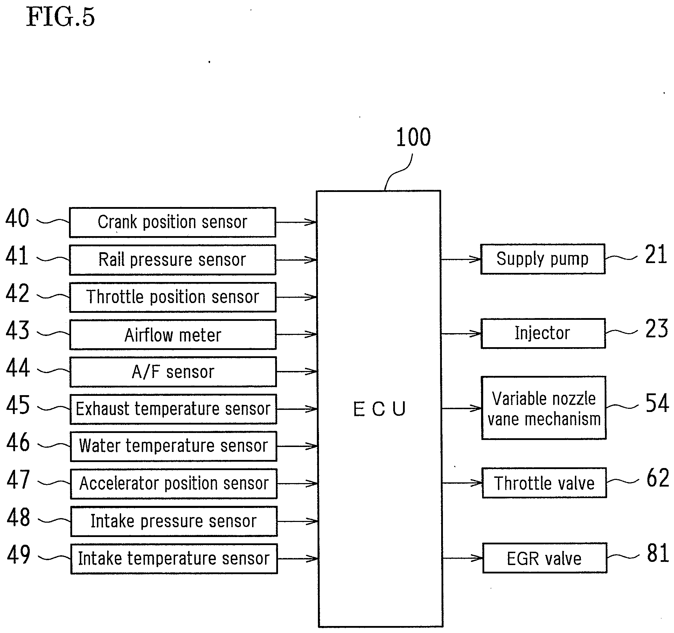

   Fig. 5 is a block diagram showing the configuration of a control system such as an ECU.
[FIG. 6]

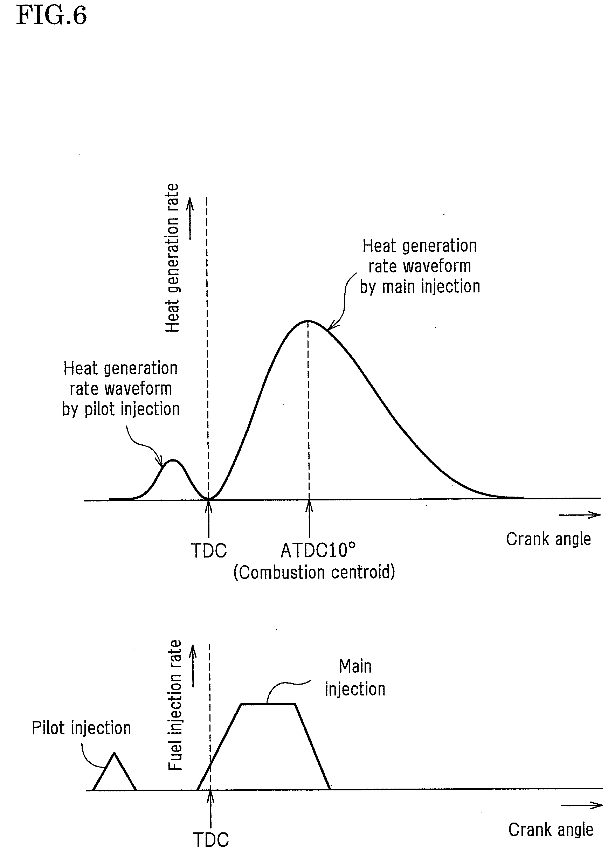

   Fig. 6 shows waveform charts showing a change of heat generation rate (heat generation amount per unit rotation angle of a crankshaft) and a change of fuel injection rate (fuel injection amount per unit rotation angle of a crankshaft) during a combustion stroke when ideal combustion is performed.
[FIG. 7]

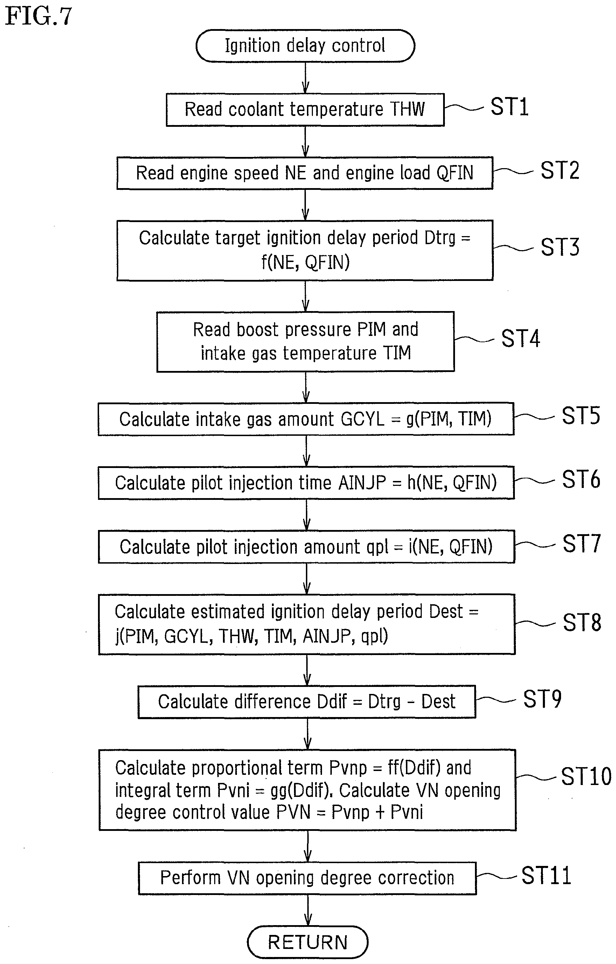

   Fig. 7 is a flowchart showing the procedure of ignition delay control.
[FIG. 8]

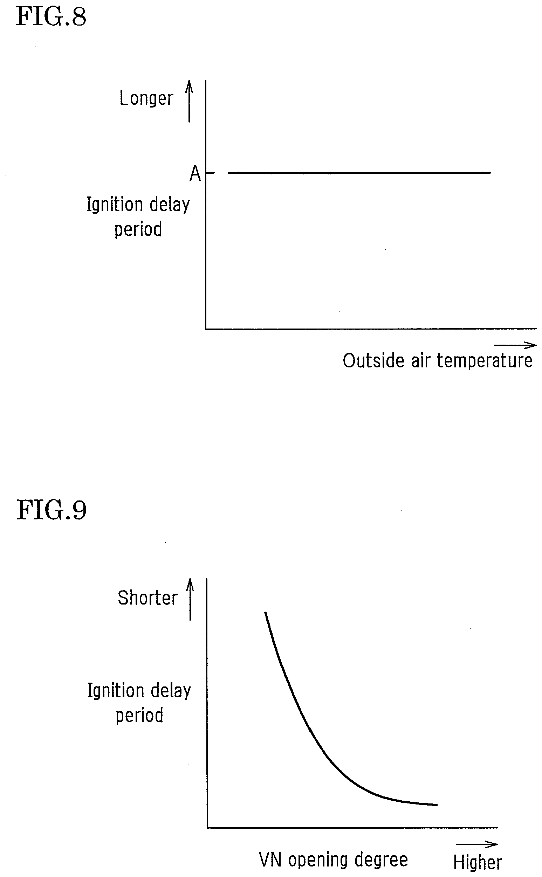

   Fig. 8 is a diagram showing a relationship between outside air temperature and an ignition delay period when ignition delay control according to an embodiment is performed.
[FIG. 9]
   Fig. 9 is a diagram showing a relationship between a VN opening degree and an ignition delay period.
[FIG. 10]
   Fig. 10 represents conventional art. Fig. 10(a) is a diagram showing a change of the amount of intake gas relative to a change of the outside air temperature, Fig. 10(b) is a diagram showing a change of the boost pressure relative to a change of the outside air temperature, and Fig. 10(c) is a diagram showing a change of the ignition delay period relative to a change of the outside air temperature.

### [Mode for Carrying Out the Invention]

Embodiments of the present invention will now be described below with reference to the drawings. In the present embodiment, a case will be described in which the present invention is applied to a common rail in-cylinder direct injection multi-cylinder (for example, in-line four-cylinder) diesel engine (compression self-igniting internal combustion engine) mounted in an automobile.

### - Engine Configuration -

First, the overall configuration of a diesel engine (referred to below as simply the engine) according to the present embodiment will now be described. Fig. 1 is a schematic configuration diagram of an engine 1 and a control system of the engine 1 according to the present embodiment. Fig. 2 is a cross-sectional diagram showing a combustion chamber 3 of the diesel engine and parts in the vicinity of the combustion chamber 3.

As shown in Fig. 1, the engine 1 according to the present embodiment is configured as a diesel engine system having a fuel supply system 2, combustion chambers 3, an intake system 6, an exhaust system 7, and the like as its main portions.

The fuel supply system 2 is provided with a supply pump 21, a common rail 22, injectors (fuel injection valves) 23, an engine fuel path 27, and the like.

The supply pump 21 draws fuel from a fuel tank, and after putting the drawn fuel under high pressure, supplies the fuel to the common rail 22 via the engine fuel path 27. The common rail 22 has a function as an accumulation chamber where the high pressure fuel is held (accumulated) at a specific pressure, and this accumulated fuel is distributed to the respective injectors 23. The injectors 23 are configured from piezo injectors within which a piezoelectric element (piezo element) is provided, and supply fuel by injection into the combustion chambers 3 by appropriately opening a valve.

The intake system 6 is provided with an intake manifold 63 connected to an intake port 15a formed in a cylinder head 15 (see Fig. 2), and an intake pipe 64 that constitutes an intake path is connected to the intake manifold 63. Also, in this intake path, an air cleaner 65, an airflow meter 43, and a throttle valve (intake-air throttle valve) 62 are disposed in order from the upstream side. The airflow meter 43 outputs an electrical signal in accordance with the amount of air that flows into the intake path via the air cleaner 65.

The exhaust system 7 is provided with an exhaust manifold 72 connected to exhaust ports 71 formed in the cylinder head 15, and an exhaust pipe 73 that constitutes an exhaust path is connected to the exhaust manifold 72. An exhaust emission purifier 77 is disposed in the exhaust path. The exhaust emission purifier 77 is provided with a catalyst (an NOx storage catalyst or an oxidation catalyst) and a DPF (Diesel Particulate Filter). As the exhaust emission purifier 77, a DPNR catalyst (Diesel Particulate-NOx Reduction catalyst) may be used.

Here, the combustion chamber 3 of the diesel engine and parts in the vicinity of the combustion chamber 3 will now be described with reference to Fig. 2. As shown in Fig. 2, in a cylinder block 11 that constitutes part of the engine, a cylindrical cylinder bore 12 is formed in each cylinder (each of four cylinders), and a piston 13 is housed within each cylinder bore 12 such that the piston 13 can slide in the vertical directions.

The combustion chamber 3 is formed on the top side of a top face 13a of the piston 13. In other words, the combustion chamber 3 is defined by a lower face of the cylinder head 15 installed on top of the cylinder block 11, an inner wall face of the cylinder bore 12, and the top face 13a of the piston 13. A cavity (recess) 13b is concavely provided in substantially the center of the top face 13a of the piston 13, and this cavity 13b also constitutes part of the combustion chamber 3.

The piston 13 is linked via a connecting rod 18 to a crankshaft that is an engine output shaft. Thus, back and forth movement of the piston 13 within the cylinder bore 12 is transmitted to the crankshaft via the connecting rod 18, and engine output is obtained due to rotation of this crank shaft. Also, a glow plug 19 is disposed so as to face the combustion chamber 3. The glow plug 19 glows due to the flow of electrical current immediately before the engine 1 is started, and functions as a starting assistance apparatus whereby ignition and combustion are promoted due to part of a fuel spray being blown onto the glow plug.

In the cylinder head 15, the intake port 15a and the exhaust port 71 are formed, and an intake valve 16 that opens/closes the intake port 15a and an exhaust valve 17 that opens/closes the exhaust port 71 are disposed. Also, the injector 23 that injects fuel directly into the combustion chamber 3 is installed in the cylinder head 15. The injector 23 is disposed substantially in the center above the combustion chamber 3, in an erect orientation along the cylinder center line P, and injects fuel introduced from the common rail 22 toward the combustion chamber 3 at a specific timing.

Furthermore, as shown in Fig. 1, the engine 1 is provided with a supercharger (turbocharger) 5. This turbocharger 5 is equipped with a turbine wheel 52 and a compressor wheel 53 that are linked via a turbine shaft 51. The compressor wheel 53 is disposed so as to face the inside of the intake pipe 64, and the turbine wheel 52 is disposed so as to face the inside of the exhaust pipe 73.

In this embodiment, the turbocharger 5 is a turbocharger of a variable nozzle type (a variable capacity type), in which a variable nozzle vane mechanism (a variable capacity mechanism) 54 (see Figs. 3 and 4) is provided on the turbine wheel 52 side, and by adjusting the opening degree of nozzle vanes 59 provided in the variable nozzle vane mechanism 54, it is possible to adjust the boost pressure of the engine 1. A specific configuration of the variable nozzle vane mechanism 54 will be described below.

An intercooler 61 for forcibly cooling intake air heated due to supercharging with the turbocharger 5 is provided in the intake pipe 64 of the intake system 6.

Also, the engine 1 is provided with an exhaust gas recirculation path (EGR path) 8 that connects the intake system 6 and the exhaust system 7. The EGR path 8 decreases the combustion temperature by appropriately directing part of the exhaust gas back to the intake system 6 and resupplying that exhaust gas to the combustion chamber 3, thus reducing the amount of NOx generated. Also, provided in the EGR path 8 are an EGR valve 81 that by being opened/closed steplessly under electronic control is capable of freely adjusting the flow rate of exhaust gas that flows through the EGR path 8, and an EGR cooler 82 for cooling exhaust that passes through (recirculates through) the EGR path 8. The EGR device (exhaust gas recirculating device) is configured with this EGR path 8, EGR valve 81, EGR cooler 82, and the like.

### - Configuration of Variable Nozzle Vane Mechanism 54 -

Next, a configuration of the variable nozzle vane mechanism 54 provided in the turbocharger (a turbocharger of a variable capacity type) 5 will now be described in reference to Figs. 3 and 4.

Fig. 3 is a front view of the variable nozzle vane mechanism 54 when viewed from the outer side of the turbocharger 5 (a view of the variable nozzle vane mechanism 54 from the compressor side). Fig. 4 is a view of the variable nozzle vane mechanism 54 when viewed from the inner side of the turbocharger 5 (the housing space side relative to the turbine wheel 52 (in a turbine housing)).

The variable nozzle vane mechanism 54 is provided with a unison ring 56 (see Fig. 3), a plurality of arms 57 that are positioned on the inner circumferential side of the unison ring 56 and engage with depressed portions 56a of the unison ring 56, a nozzle plate (NV plate) 58 disposed so as to face the unison ring 56 in the center axis direction of the turbocharger (see Fig. 4), a main arm 57a for driving the plurality of arms 57, and vane shafts 59a that are connected to the arms 57 and drive the nozzle vanes 59. The vane shafts 59a are rotatably supported by the nozzle plate 58, and are coupled to each of the arms 57 and the nozzle vanes 59 such that they turn as a single body.

A housing plate (not shown) and the nozzle plate 58 are disposed so as to face each other, and space for disposing the nozzle vanes 59 is formed between the housing plate and the nozzle plate. That is, an exhaust gas flow path is formed between the nozzle plate 58 and the housing plate, and the nozzle vanes 59 are disposed in this flow path.

The variable nozzle vane mechanism 54 is a mechanism for adjusting a turn angle (turning attitude) of the plurality (for example, 12) of nozzle vanes 59 disposed at equal intervals on the outer circumference side of the turbine wheel 52. In the variable nozzle vane mechanism, by a drive link 57b connected to the main arm 57a being turned by a specific angle, this turning force is transmitted to the nozzle vanes 59 via a drive shaft 57c, the main arm 57a, the unison ring 56, the arms 57, and the vane shafts 59a, so that the nozzle vanes 59 turn in unison, and it is thus possible to adjust the flow amount and the flow rate of exhaust gas from a turbine housing vortex chamber towards the turbine wheel 52. Since the configuration and the operation of the variable nozzle vane mechanism 54 are well known, a detailed description is omitted here.

### - Sensors -

Various sensors are installed at respective sites of the engine 1, and these sensors output signals related to environmental conditions at the respective sites and the operating state of the engine 1.

For example, the airflow meter 43 outputs a detection signal in accordance with the flow rate of intake air (the amount of intake air) on the upstream side of the throttle valve 62 within the intake system 6. An intake temperature sensor 49 is disposed in the intake manifold 63 and outputs a detection signal in accordance with the temperature of intake air. An intake pressure sensor 48 is disposed in the intake manifold 63 and outputs a detection signal in accordance with the intake air pressure. An A/F (air-fuel ratio) sensor 44 outputs a detection signal that continuously changes in accordance with the oxygen concentration in exhaust gas on the downstream side of the exhaust emission purifier 77 of the exhaust system 7. An exhaust temperature sensor 45 likewise outputs a detection signal in accordance with the temperature of exhaust gas (exhaust temperature) on the downstream side of the exhaust emission purifier 77 of the exhaust system 7. A rail pressure sensor 41 outputs a detection signal in accordance with the pressure of fuel accumulated in the common rail 22. A throttle position sensor 42 detects the opening degree of the throttle valve 62.

### - ECU -

An ECU 100 is provided with input-output circuits and a micro computer composed of a CPU, a ROM, a RAM, and the like that are not shown. As shown in Fig. 5, the input circuit of the ECU 100 is connected to the rail pressure sensor 41, the throttle position sensor 42, the airflow meter 43, the A/F sensor 44, the exhaust temperature sensor 45, the intake pressure sensor 48, and the intake temperature sensor 49. Furthermore, the input circuit is connected to a water temperature sensor 46 that outputs a detection signal in accordance with the coolant temperature of the engine 1, an accelerator position sensor 47 that outputs a detection signal in accordance with the amount of accelerator pedal depression, a crank position sensor 40 that outputs a detection signal (pulse) each time the output shaft (crankshaft) of the engine 1 rotates a specific angle, and the like.

On the other hand, the output circuit of the ECU 100 is connected to the supply pump 21, the injectors 23, the throttle valve 62, the EGR valve 81, and the variable nozzle vane mechanism 54 (an actuator that adjusts the opening degree of the nozzle vanes 59) of the turbocharger 5.

The ECU 100 executes various types of control of the engine 1 based on output from the various types of sensors described above, calculation values obtained by an arithmetic expression using such output values, and the various types of maps stored on the ROM.

For example, the ECU 100 executes pilot injection (auxiliary injection) and main injection (primary injection) as control of fuel injection of the injectors 23.

The pilot injection is an operation in which a small amount of fuel is injected from the injectors 23 prior to the main injection. The pilot injection is an injection operation for suppressing fuel ignition delay in the main injection and for leading to stable diffusion combustion, and is also called auxiliary injection. Also, the pilot injection in the present embodiment not only has the function to slow the initial combustion rate in the above-described main injection, but also has the preheating function to increase the temperature in a cylinder. That is, after the pilot injection is performed, fuel injection is suspended, and the temperature of compressed gas (the temperature in a cylinder) is sufficiently increased until the main injection is started so as to reach the self-igniting temperature of fuel (for example, 1000 K), and thereby favorable ignitability of fuel injected in the main injection is secured.

The main injection is an injection operation for generating torque of the engine 1 (operation of supplying fuel for torque generation). The fuel injection amount in the main injection is basically determined so as to obtain the torque required in accordance with the operating state such as the engine speed, the accelerator operation amount, the coolant temperature, the intake air temperature, and the like. For example, the greater the engine speed (engine speed calculated based on the detection value from the crank position sensor 40) or the greater the accelerator operation amount (the accelerator pedal depression amount sensed by the accelerator position sensor 47) (i.e., the greater the accelerator opening degree), the greater the resulting torque requirement value of the engine 1, and the greater the fuel injection amount in the main injection is accordingly set.

Regarding an example of a specific fuel injection mode, the pilot injection (fuel injection from a plurality of injection ports formed in the injector 23) is performed before the piston 13 reaches the compression top dead center, fuel injection is suspended, and after a specific interval, the main injection is performed when the piston 13 reaches the vicinity of the compression top dead center. Accordingly, fuel burns due to self ignition, and the energy generated by this combustion then becomes kinetic energy for pressing the piston 13 down toward the bottom dead center (energy that is to serve as engine output), thermal energy for raising the temperature in the combustion chamber 3, and thermal energy that is dissipated to the outside (e.g., coolant) via the cylinder block 11 and the cylinder head 15.

In the diesel engine 1, it is important to concurrently satisfy demands such as improving exhaust emissions by suppressing the amount of NOx generated and the amount of smoke generated, reducing combustion noises during a combustion stroke, and ensuring sufficient engine torque. As a technique to concurrently satisfy such demands, appropriately controlling the changing state of the heat generation rate (a changing state expressed as a heat generation rate waveform) in a cylinder during a combustion stroke is effective.

In the upper waveform shown in Fig. 6, the horizontal axis represents the crank angle, the vertical axis represents the heat generation rate, indicating an ideal heat generation rate waveform regarding the combustion of fuel injected in the pilot injection and the main injection. In the figure, "TDC" indicates a crank angle position corresponding to the compression top dead center of the piston 13. The lower waveform shown in Fig. 6 is a waveform of the injection rate of fuel injected from the injector 23 (the fuel injection amount per unit rotation angle of the crankshaft).

In the heat generation rate waveform, for example, the combustion of fuel injected in the main injection is started when the piston 13 is in the vicinity of the compression top dead center (TDC), the heat generation rate reaches its maximum value (peak value) at a specific piston position after the compression top dead center of the piston 13 (e.g., a point 10 degrees after the compression top dead center (10° ATDC)), and furthermore the combustion of fuel injected in the main injection ends at another specific piston position after the compression top dead center (e.g., a point 25 degrees after the compression top dead center (25° ATDC)). Executing the combustion of an air-fuel mixture in such a heat generation rate changing state creates a situation, for example, where the combustion of 50% of the air-fuel mixture present in a cylinder is complete at 10 degrees after the compression top dead center (10° ATDC). In other words, with a point 10 degrees after the compression top dead center (10° ATDC) serving as a combustion centroid, about 50% of the total amount of heat generated in an expansion stroke is generated no later than 10° ATDC, and the engine 1 can be operated with high thermal efficiency.

In a condition where combustion in accordance with such an ideal heat generation rate waveform is carried out, sufficient preheating within a cylinder is performed by pilot injection, and due to this preheating, fuel injected in the main injection undergoes thermal decomposition by being immediately exposed to a temperature environment having a temperature higher than or equal to the self-ignition temperature, and combustion starts immediately after injection.

In addition to the aforementioned pilot injection and main injection, after-injection and post-injection are performed as necessary. Since the functions of these types of injection are well known, descriptions are omitted here.

The ECU 100 also controls the opening degree of the EGR valve 81 in accordance with the operating state of the engine 1 to adjust the amount of exhaust gas recirculated towards the intake manifold 63 (EGR amount). The EGR amount is set in accordance with an EGR map that is created through experimentation and simulation and stored on the ROM in advance. The EGR map is a map for determining the EGR amount (EGR rate) using the engine speed and the engine load as parameters.

The fuel injection pressure when executing fuel injection is determined in accordance with the internal pressure of the common rail 22. In regard to the internal pressure of the common rail, normally, the higher the engine load and the greater the engine speed, the greater the target value for the pressure of fuel supplied from the common rail 22 to the injectors 23 (i.e., the target rail pressure). This target rail pressure is set according to a fuel pressure setting map stored on, for example, the ROM. In the present embodiment, the fuel pressure is adjusted in accordance with the engine load or the like so as to be between 30 MPa and 200 MPa.

Also, the ECU 100 determines the amount of fuel to be injected and the form of fuel injection based on the engine operating state. Specifically, the ECU 100 calculates the engine speed based on the value sensed by the crank position sensor 40 and obtains the amount of accelerator pedal depression (accelerator position) based on the value sensed by the accelerator position sensor 47, and then determines the total amount of fuel to be injected (the sum of the injection amount in the pilot injection and the injection amount in the main injection) based on the engine speed and the accelerator opening degree.

### - Ignition Delay Control -

A feature of the present embodiment is ignition delay control for suitably adjusting the ignition delay period of fuel injected in the pilot injection. Hereinbelow, the ignition delay control will now be described.

As for an outline of the ignition delay control, a target ignition delay period calculated based on the operating state of the engine 1 and an actual ignition delay period (hereinafter referred to as an "estimated ignition delay period") are compared, and in accordance with their difference, the nozzle vane opening degree of the variable nozzle vane mechanism 54 is adjusted. Regarding the nozzle vane opening degree, in the case where the estimated ignition delay period is shorter than the target ignition delay period (the ignition delay is small), the larger the difference, the larger the nozzle vane opening degree is set in order to lower the boost pressure to extend the ignition delay period, and in contrast, in the case where the estimated ignition delay period is longer than the target ignition delay period (the ignition delay is large), the larger the difference, the smaller the nozzle vane opening degree is set in order to increase the boost pressure to shorten the ignition delay period.

Hereinafter, the ignition delay control will now be specifically described with reference to the flowchart of Fig. 7. The procedure of this flowchart is executed repeatedly every few milliseconds or every time a combustion stroke is performed after the engine 1 is started.

First, in step ST1, a coolant temperature THW of the engine 1 is read. The coolant temperature THW is sensed by the water temperature sensor 46.

Next, the procedure advances to step ST2, and an engine speed NE and an engine load QFIN are read. The engine speed NE is calculated based on the output signal of the crank position sensor 40. The engine load QFIN is calculated based on the output signal of the accelerator position sensor 47,and the like.

In step ST3, using the engine speed NE and the engine load QFIN, a target ignition delay period Dtrg is calculated with a specific arithmetic expression (Dtrg = f(NE, QFIN)). This arithmetic expression is for obtaining, as the target ignition delay period Dtrg, an ignition delay period in the pilot injection required for performing ideal combustion, for example, as shown in Fig. 6. It is obtained through experimentation and simulation in advance.

In step ST4, a boost pressure PIM and an intake gas temperature TIM are read. The boost pressure PIM is sensed by the intake air pressure sensor 48. The intake gas temperature TIM is sensed by the intake air temperature sensor 49.

In step ST5, using the boost pressure PIM and the intake gas temperature TIM, an intake gas amount GCYL is calculated with a specific arithmetic expression (GCYL = g(PIM, TIM)).

In step ST6, using the engine speed NE and the engine load QFIN, a pilot injection time AINJP is calculated with a specific arithmetic expression (AINJP = h(NE, QFIN)).

In step ST7, using the engine speed NE and the engine load QFIN, a pilot injection amount qpl is calculated with a specific arithmetic expression (qpl = i(NE, QFIN)).

As for the arithmetic expressions of the steps ST5 to ST7, well known arithmetic expressions may be used, or arithmetic expressions may be obtained through experimentation and simulation.

In step ST8, using the boost pressure PIM, the intage gas amount GCYL, the coolant temperature THW, the intage gas temperature TIM, the pilot injection time AINJP, and the pilot injection amount qpl, an estimated ignition delay period Dest is calculated with a specific arithmetic expression (Dest = j(PIM, GCYL, THW, TIM, AINJP, qpl)). This arithmetic expression is for calculating the actual ignition delay period of fuel injected in the pilot injection, and is obtained through experimentation and simulation in advance.

After the target ignition delay period Dtrg (step ST3 above) and the estimated ignition delay period Dest (step ST8 above) are calculated in the above-described manner, the procedure advances to step ST9, and a difference Ddif representing the difference between these ignition delay periods is calculated. Specifically, the difference Ddif is obtained by subtracting the estimated ignition delay period Dest from the target ignition delay period Dtrg (Ddif = Dtrg-Dest). That is, in the case where the actual ignition delay period (the estimated ignition delay period Dest) is shorter than a suitable ignition delay period (the target ignition delay period Dtrg), i.e., combustion of fuel injected in the pilot injection starts too soon, the difference Ddif is obtained as a large value. In contrast, in the case where the actual ignition delay period (the estimated ignition delay period Dest) is longer than a suitable ignition delay period (the target ignition delay period Dtrg), i.e., combustion of fuel injected in the pilot injection starts too late, the difference Ddif is obtained as a small value.

After the difference Ddif is calculated in this manner, the procedure advances to step ST10, and a proportional term (a proportional term Pvnp = ff(Ddif)) and an integral term (an integral term Pvni = gg(Ddif)) for obtaining a control value for correcting the opening degree of the nozzle vanes 59 (hereinafter referred to as a "VN opening degree") are both calculated, and the sum of the proportional term and the integral term are calculated as a VN opening degree control value (control value PVN = Pvnp + Pvni). Arithmetic expressions for obtaining this proportional term Pvnp and integral term Pvni are also obtained through experimentation and simulation in advance.

The VN opening degree control value PVN is obtained as described above, and the VN opening degree is corrected in accordance with this control value in step ST11. Specifically, in the case where the calculated difference Ddif is a large value (in the case where the estimated ignition delay period Dest is shorter than the target ignition delay period Dtrg), the variable nozzle vane mechanism 54 is controlled such that the ignition delay period is long, or the VN opening degree is large. In contrast, in the case where the calculated difference Ddif is a small value (in the case where the estimated ignition delay period Dest is longer than the target ignition delay period Dtrg), the variable nozzle vane mechanism 54 is controlled such that the ignition delay period is short, or the VN opening degree is small.

The above-described operations are repeated, and thus even when various parameters that affect the ignition delay period change, the ignition delay period of fuel injected in the pilot injection can be suitably adjusted, thus enabling the combustion state of fuel injected in the main injection to be obtained as an ideal combustion state (a combustion state with which a heat generation rate waveform as shown in, for example, Fig. 6 is obtained). As a result, it is possible to concurrently satisfy demands such as improving exhaust emissions by suppressing the amount of NOx generated and the amount of smoke generated, reducing combustion noises during a combustion stroke, and ensuring sufficient engine torque.

Fig. 8 is a diagram showing a change of the ignition delay period relative to a change of the outside air temperature when the ignition delay control of the present embodiment is performed. Fig. 8 shows a case where A in the diagram is set as a target ignition delay period. As is clear also from this diagram, in the case where the ignition delay control of the present embodiment is performed, the ignition delay period is the target ignition delay period even when the outside air temperature changes, and thus achieving an ideal combustion state.

### (Variation)

In the above-described embodiment, using the calculated difference Ddif, both the proportional term Pvnp and the integral term Pvni for obtaining the control value PVN to correct the VN opening degree are calculated. Alternatively, in the present variation, control of the VN opening degree is performed while taking in consideration that the rate of ignition delay period change is different relative to the amount of VN opening degree change in accordance with the opening degree region of the VN opening degree. A specific description will now be given below.

Fig. 9 is a diagram showing a tendency of ignition delay period change in accordance with the opening degree region of the VN opening degree. Accordingly, in a region where the VN opening degree is relatively small, the rate of ignition delay period change relative to the amount of VN opening degree change is relatively large. In other words, the extent of the influence of VN opening degree change on ignition delay period change is large, and the amount of VN opening degree change necessary to alter the ignition delay period to the extent of a unit ignition delay period is small. Accordingly, in a region where the VN opening degree is relatively large, the rate of ignition delay period change relative to the amount of VN opening degree change is relatively small. In other words, the extent of the influence of VN opening degree change on ignition delay period change is small, and the amount of VN opening degree change necessary to alter the ignition delay period to the extent of a unit ignition delay period is large.

While taking this in consideration, in the case of changing the VN opening degree to correct the ignition delay period, the amount of VN opening degree change is calculated in accordance with the current VN opening degree while taking in consideration the extent of influence on the change of the ignition delay period. Specifically, the VN opening degree control value PVN obtained in step ST10 as in the flowchart described for the above-described embodiment is multiplied by a correction factor that is in accordance with the current VN opening degree to correct the VN opening degree control value PVN, and the VN opening degree is corrected according to the corrected control value PVN. A control value PVN correction operation is set such that the greater the current VN opening degree, the larger the amount of correction on the control value PVN (an amount of correction for increasing a VN opening degree change).

Thereby, in accordance with the opening degree region of the VN opening degree, a suitable adjustment of an ignition delay period that takes in consideration of characteristics such as the rate of ignition delay period change is different relative to the amount of VN opening degree change can be attained highly accurately.

### - Other Embodiments -

In the embodiment and the variation described above, a case was described in which the present invention is applied to an in-line four-cylinder diesel engine mounted in an automobile. The present invention is not limited to use in an automobile, and is applicable also to engines used in other applications. Also, there is no particular limitation on the number of cylinders or the engine type (classified as an in-line engine, V engine, horizontally opposed engine, and so forth).

In the above-described embodiment and variation, a description was given of a case where the ignition delay period of fuel injected in the pilot injection is suitably adjusted. The present invention is not limited thereto, and is also applicable to a case where the ignition delay period of fuel injected in the main injection is suitably adjusted when performing the main injection without performing the pilot injection.

### [Industrial Applicability]

The present invention can be employed in a common rail in-cylinder direct injection multi-cylinder diesel engine mounted in an automobile to control for a suitable adjustment of a fuel ignition delay period.

### [Reference Signs List]

- 1: Engine (internal combustion engine)
- 23: Injector (fuel injection valve)
- 5: Turbocharger (supercharger)
- 54: Variable nozzle vane mechanism (variable capacity mechanism)
- 59: Nozzle vane
- 100: ECU

## Claims

1. A control apparatus (100) for a compression self-igniting internal combustion engine (1) including a supercharger (5) of a variable capacity type having a variable capacity mechanism (54),
the control apparatus (100) comprising a control means that controls the variable capacity mechanism (54) such that an actual ignition delay period (Dest) of fuel injected into a cylinder from a fuel injection valve (23) is brought close to a target ignition delay period (Dtrg),
the variable capacity mechanism (54) being a variable nozzle vane mechanism (54) that adjusts an opening degree of a plurality of nozzle vanes (59) that can vary a flow path area of an exhaust gas flow path inside the supercharger (5),
**characterized in that**
the control means being configured to calculate a proportional term (Pvnp) and an integral term (Pvni), both for obtaining a control value for correcting the opening degree of the nozzle vanes (59), based on a difference (Ddif) between ignition delay periods obtained by subtracting the actual ignition delay period (Dest) from the target ignition delay period (Dtrg), calculate a sum of the proportional term (Pvnp) and the integral term (Pvni) as a nozzle-vane-opening-degree control value (PVN), control the opening degree of the nozzle vanes based on the nozzle-vane-opening-degree control value (PVN) thus calculated, and increase the opening degree of the nozzle vanes (59) such that the larger the difference (Ddif), the longer the actual ignition delay period (Dest) of fuel, and
the control means being configured such that, in a case of controlling an ignition delay period by adjustment of the opening degree of the nozzle vanes (59) in an opening degree region where the opening degree is relatively large, an amount of nozzle vane opening degree change relative to an amount of unit ignition delay period change is set so as to be larger than in a case of controlling the ignition delay period by adjustment of the opening degree of the nozzle vanes (59) in an opening degree region where the opening degree is smaller than in the former opening degree region.

2. The control apparatus (100) for an internal combustion engine (1) according to claim 1, wherein
the actual ignition delay period (Dest) is estimated based on at least one of boost pressure (PIM) in an intake system (6), amount of intake gas (GCYL), temperature of intake gas (TIM), internal combustion engine coolant temperature (THW), fuel injection time (AINJP), and fuel injection amount (qpl), while the target ignition delay period (Dtrg) is set in accordance with an internal combustion engine operating state.

3. The control apparatus (100) for an internal combustion engine (1) according to claim 1 or 2, wherein
as a fuel injection operation from the fuel injection valve (23) into the cylinder, at least main injection and auxiliary injection that is performed prior to the main injection and that contributes to preheating inside the cylinder can be performed, and the control means is configured to control the variable capacity mechanism (54) such that an actual ignition delay period of fuel injected in the auxiliary injection is brought close to the target ignition delay period (Dtrg).

## Patentansprüche

1. Steuerungsgerät (100) für eine Kompressionselbstzündungsbrennkraftmaschine (1) mit einem Turbolader (5) einer Bauart mit variabler Verdrängung, der einen Mechanismus (54) mit variabler Verdrängung hat,
das Steuerungsgerät (100) eine Steuerungseinrichtung aufweist, die den Mechanismus (54) mit variabler Verdrängung derart steuert, dass eine tatsächliche Zündungsverzögerungsdauer (Dest) eines Kraftstoffs, der in einen Zylinder von einem Kraftstoffeinspritzventil (23) eingespritzt wird, nahe einer Sollzündungsverzögerungsdauer (Dtrg) gebracht wird,
wobei der Mechanismus (54) mit variabler Verdrängung ein variabler Düsenschaufelmechanismus (54) ist, der den Öffnungsgrad einer Vielzahl von Düsenschaufeln (59) einstellt, die eine Strömungswegfläche eines Abgasströmungswegs innerhalb des Turboladers (5) variieren können,
**dadurch gekennzeichnet, dass**
die Steuerungseinrichtung gestaltet ist, um einen proportionalen Term (Pvnp) und einen integralen Term (Pvni), die beide zum Erhalten eines Steuerungswerts zum Korrigieren des Öffnungsgrads der Düsenschaufeln (59) dienen, auf der Grundlage einer Differenz (Ddif) zwischen Zündungsverzögerungsdauern, die durch Subtrahieren der tatsächlichen Zündungsverzögerungsdauer (Dest) von der Sollzündungsverzögerungsdauer (Dtrg) erhalten werden, zu berechnen, um eine Summe des proportionalen Terms (Pvnp) und des integralen Terms (Pvni) als einen Düsenschaukelöffnungsgradsteuerungswert (PVN) zu berechnen, um den Öffnungsgrad der Düsenschaufeln, der auf der Grundlage des Düsenschaufelöffnungsgradsteuerungswerts (PVN) somit berechnet wurde, zu steuern und um den Öffnungsgrad der Düsenschaufeln (59) derart zu erhöhen, dass je größer die Differenz (Ddif) ist, desto länger ist die tatsächliche Zündungsverzögerungsdauer (Dest) an Kraftstoff, und
die Steuerungseinrichtung derart gestaltet ist, dass in einem Fall, in dem eine Zündungsverzögerungsdauer durch eine Einstellung des Öffnungsgrads der Düsenschaufeln (59) in einer Öffnungsgradregion, in der der Öffnungsgrad relativ groß ist, gesteuert wird, ein Ausmaß einer Düsenschaufelöffnungsgradänderung relativ zu einem Ausmaß einer Einheitszündungsverzögerungsdaueränderung festgelegt ist, um in einem Fall größer zu sein, in dem die Zündungsverzögerungsdauer durch eine Einstellung des Öffnungsgrads der Düsenschaufeln (59) in einer Öffnungsgradregion, in der der Öffnungsgrad kleiner ist als in der vorherigen Öffnungsgradregion, gesteuert wird.

2. Steuerungsgerät (100) für eine Brennkraftmaschine (1) nach Anspruch 1, wobei
die tatsächliche Zündungsverzögerungsdauer (Dest) auf der Grundlage von zumindest einem Ladedruck (PIM) in einem Einlasssystem (6), einer Menge eines Einlassgases (GCYL), einer Temperatur eines Einlassgases (TIM), einer Brennkraftmaschinenkühltemperatur (THW), einer Kraftstoffeinspritzzeit (AINJP) und einer Kraftstoffeinspritzmenge (qpl) abgeschätzt wird, während die Sollzündungsverzögerungsdauer (Dtrg) in Übereinstimmung mit einem Brennkraftmaschinenbetriebszustand festgelegt ist.

3. Steuerungsgerät (100) für eine Brennkraftmaschine (1) nach Anspruch 1 oder 2, wobei
als ein Kraftstoffeinspritzbetrieb von dem Kraftstoffeinspritzventil (23) in den Zylinder zumindest eine Haupteinspritzung und eine Hilfseinspritzung, die vor der Haupteinspritzung ausgeführt wird und die ein Vorheizen innerhalb des Zylinders unterstützt, ausgeführt werden können und die Steuerungseinrichtung gestaltet ist, um den Mechanismus (54) mit variabler Verdrängung derart zu steuern, dass eine tatsächliche Zündungsverzögerungsdauer an Kraftstoff, der in der Hilfseinspritzung eingespritzt wird, nahe der Sollzündungsverzögerungsdauer (Dtrg) gebracht wird.

## Revendications

1. Appareil de commande (100) pour un moteur à combustion interne à auto-allumage par compression (1) comprenant un compresseur d'alimentation (5) de type à cylindrée variable ayant un mécanisme à cylindrée variable (54),
l'appareil de commande (100) comprenant un moyen de commande qui commande le mécanisme à cylindrée variable (54) de sorte qu'une véritable période de délai d'allumage (Dest) de carburant injecté dans un cylindre à partir d'une soupape d'injection de carburant (23) se rapproche d'une période de délai d'allumage cible (Dtrg),
le mécanisme à cylindrée variable (54) étant un mécanisme de volet de tuyère variable (54) qui ajuste un degré d'ouverture d'une pluralité de volets de tuyère (59) qui peuvent modifier une surface de trajectoire d'écoulement d'une trajectoire d'écoulement de gaz d'échappement à l'intérieur du compresseur d'alimentation (5),
**caractérisé en ce que** :
le moyen de commande étant configuré pour calculer un terme proportionnel (Pvnp) et un terme entier (Pvni), les deux pour obtenir une valeur de commande afin de corriger le degré d'ouverture des volets de tuyère (59), sur la base d'une différence (Ddif) entre les périodes de délai d'allumage obtenues en soustrayant la véritable période de délai d'allumage (Dest) de la période de délai d'allumage cible (Dtrg), calculer une somme du terme proportionnel (Pvnp) et du terme entier (Pvni) en tant que valeur de commande de degré d'ouverture de volet de tuyère (PVN), commander le degré d'ouverture des volets de tuyère sur la base de la valeur de commande de degré d'ouverture de volet de tuyère (PVN) ainsi calculée, et augmenter le degré d'ouverture des volets de tuyère (59) de sorte que plus la différence (Ddif) est importante, plus la véritable période de délai d'allumage (Dest) de carburant est longue, et
le moyen de commande étant configuré de sorte que, dans un cas dans lequel on commande une période de délai d'allumage en ajustant le degré d'ouverture des volets de tuyère (59) dans une région de degré d'ouverture dans laquelle le degré d'ouverture est relativement important, une quantité de changement de degré d'ouverture de volet de tuyère par rapport à une quantité de changement de période de délai d'allumage unitaire est déterminée pour être plus importante que dans un cas dans lequel on commande la période de délai d'allumage en ajustant le degré d'ouverture des volets de tuyère (59) dans une région de degré d'ouverture dans laquelle le degré d'ouverture est inférieur à la région de degré d'ouverture précédente.

2. Appareil de commande (100) pour un moteur à combustion interne (1) selon la revendication 1, dans lequel :
la véritable période de délai d'allumage (Dest) est estimée sur la base d'au moins l'un parmi une pression de suralimentation (PIM) dans un système d'admission (6), la quantité de gaz d'admission (GCYL), la température du gaz d'admission (TIM), la température de réfrigérant de moteur à combustion interne (THW), le temps d'injection de carburant (AINJP) et la quantité d'injection de carburant (qpl), alors que la période de délai d'allumage cible (Dtrg) est déterminée selon un état de fonctionnement du moteur à combustion interne.

3. Appareil de commande (100) pour un moteur à combustion interne (1) selon la revendication 1 ou 2, dans lequel :
en tant qu'opération d'injection de carburant de la soupape d'injection de carburant (23) dans le cylindre, au moins une injection principale et une injection auxiliaire qui est réalisée avant l'injection principale et qui contribue à préchauffer l'intérieur du cylindre, peuvent être réalisées, et le moyen de commande est configuré pour commander le mécanisme à cylindrée variable (54) de sorte qu'une véritable période de délai d'allumage du carburant injecté dans l'injection auxiliaire se rapproche de la période de délai d'allumage cible (Dtrg).
